# EUROPEAN PATENT APPLICATION

(11) **EP 4 557 681 A1**
(43) Date of publication of application: **21.05.2025**
(21) Application number: 23859452.7
(22) Date of filing: 31.08.2023
(51) Int. Cl.: H04L 41/06, G06F 11/30

(54) **DATA ANALYSIS METHOD AND APPARATUS**

(30) Priority: 01.09.2022 CN 202211067195
(71) Applicant: Huawei Technologies Co., Ltd., Shenzhen, Guangdong 518129 (CN)
(72) Inventor: XU, Ruiyue, Shenzhen, Guangdong 518129 (CN); SHI, Xiaoli, Shenzhen, Guangdong 518129 (CN)
(74) Representative: Isarpatent
(86) International application number: PCT/CN2023/116129
(87) International publication number: WO 2024/046423

(57) **Abstract**

This application relates to the field of communication technologies, and provides a data analysis method and apparatus. The data analysis method includes: A first communication apparatus sends an identity and capability information of a first management data analytic module to a second communication apparatus, the second communication apparatus may send the identity and control information of the first management data analytic module to the first communication apparatus, and the first communication apparatus may control running of the first management data analytic module based on the control information, so that the first management data analytic module can pertinently perform data analysis based on the control information of the second communication apparatus, thereby improving pertinence of data analysis performed by the first communication apparatus.

## Description

### CROSS-REFERENCE TO RELATED APPLICATIONS

This application claims priority to Chinese Patent Application No. 202211067195.2, filed with the China National Intellectual Property Administration on September 1, 2022 and entitled "DATA ANALYSIS METHOD AND APPARATUS", which is incorporated herein by reference in its entirety.

### TECHNICAL FIELD

This application relates to the field of communication technologies, and in particular, to a data analysis method and apparatus.

### BACKGROUND

An autonomous network includes a domain management function (domain management function, Domain-MnF) unit and a cross domain management function (cross domain management function, CD-MnF) unit. The domain management function unit is configured to analyze data from a network element to obtain an analytic result. The cross domain management function unit is configured to obtain the analytic result from the domain management function unit, to discover or resolve possible problems of the network element based on the analytic result.

Currently, the domain management function unit receives an analytic request from the cross domain management function unit. After the domain management function unit receives the analytic request, the domain management function unit may analyze various data whose analysis is supported by the domain management function unit, to obtain a plurality of analytic results, and may send the plurality of analytic results to the cross domain management function unit. However, the cross domain management function unit may need only a part of the analytic results, that is, the other part of the analytic results is redundant information for the cross domain management function unit. In other words, not all of the plurality of analytic results of data analysis performed by the domain management function unit are required by the cross domain management function unit, that is, pertinence of data analysis performed by the domain management function unit is poor.

### SUMMARY

This application provides a data analysis method and apparatus, to improve pertinence of data analysis.

According to a first aspect, an embodiment of this application provides a data analysis method. The method may be performed by a first communication apparatus, or may be performed by a chip system. The chip system may implement functions of the first communication apparatus. The first communication apparatus is, for example, a domain management unit, a cross domain management unit, or a service operation unit in an autonomous network. The method includes: sending first information to a second communication apparatus, where the first information includes an identity and capability information of a first management data analytic module, the first management data analytic module is disposed in the first communication apparatus, and the first management data analytic module is configured to analyze information about a network element; receiving second information from the second communication apparatus, where the second information includes the identity and control information of the first management data analytic module, and the control information is used to configure a running parameter of the first management data analytic module; analyzing information about at least one network element by using the first management data analytic module, to obtain a first analytic result; and sending the first analytic result to the second communication apparatus.

In this embodiment of this application, the second communication apparatus may determine a management data analytic module (for example, the first management data analytic module), in the first communication apparatus, required by the second communication apparatus, which is equivalent to that the second communication apparatus specifies the first management data analytic module required by the second communication apparatus. In this way, the first communication apparatus may analyze data by using the first management data analytic module determined by the second communication apparatus, and does not need to perform data analysis by using another management data analytic module that is not determined by the second communication apparatus, which helps improve pertinence of data analysis performed by the first communication apparatus. In addition, the first communication apparatus may control running of the first management data analytic module based on the control information from the second communication apparatus, which is equivalent to that the first management data analytic module performs data analysis under control of the second communication apparatus. In this way, the first analytic result obtained by the first management data analytic module through analysis better meets a requirement of the second communication apparatus, which also helps further improve pertinence of data analysis. In addition, the first communication apparatus does not need to send, to the second communication apparatus, an analytic result that is not required by the second communication apparatus, which helps reduce transmission resources.

In a possible implementation, the capability information of the first management data analytic module includes one or more of the following: a capability identity, where the capability identity indicates a capability of the first management data analytic module; information about supported analytic data; or information about a supported analytic operation.

In the foregoing implementation, a plurality of possibilities of the capability information of the first management data analytic module are provided. For example, the capability information of the first management data analytic module is represented by the capability identity, which can simply represent the capability information of the first management data analytic module, and helps reduce bits occupied by the capability information of the first management data analytic module. For another example, the capability information of the first management data analytic module includes the information about the supported analytic data or the information about the supported analytic operation, which provides more comprehensive information about the first management data analytic module for the second communication apparatus, and helps the second communication apparatus determine a management data analytic module that better meets the requirement of the second communication apparatus.

In a possible implementation, the analytic data includes one or more of the following: coverage analytic data, where the coverage analytic data includes related data for analyzing coverage of a signal sent by the network element; mobility analytic data, where the mobility analytic data includes related data for analyzing handover of a terminal device between network elements; energy saving analytic data, where the energy saving analytic data includes related data for analyzing energy saving of the network element; service quality analytic data, where the service quality analytic data includes related data for analyzing service quality of the network element; rate analytic data, where the rate analytic data includes related data for analyzing a data transmission rate of the network element; or capacity analytic data, where the capacity analytic data includes related data for analyzing a capacity of the network element.

In the foregoing implementation, a plurality of possibilities of the analytic data are provided, which enriches content of the analytic data. In addition, the first management data analytic module can obtain more analytic results based on the analytic data.

In a possible implementation, the analytic operation includes one or more of the following: a problem identification operation, where the problem identification operation is used to identify a problem existing in a network; a root cause analytic operation, where the root cause analytic operation is used to identify a cause of a problem occurring in a network; or an analytic solution adjustment operation, where the analytic solution adjustment operation is used to analyze an adjustment method of network information.

In the foregoing implementation, a plurality of possibilities of the analytic operation are provided, which enriches content of the analytic operation. In addition, the first management data analytic module supports these analytic operations, which facilitates more comprehensive analysis of various aspects of the problem of the network.

In a possible implementation, the control information includes one or more of the following: information about an analytic scope, where the analytic scope indicates the at least one network element; information about analytic time, where the analytic time indicates time at which the first management data analytic module performs the analytic operation; or capability enabling information, where the capability enabling information is used to enable a part of or all capabilities of the first management data analytic module.

In the foregoing implementation, a plurality of possibilities of the control information is provided, which enriches content of the control information. In addition, the second communication apparatus may flexibly control, based on the capability information of the first management data analytic module, one or more of the following: the analytic scope, the analytic time, or the enabled capability of the first management data analytic module, so that the first management data analytic module can run based on the requirement of the second communication apparatus, to prevent the first management data analytic module from performing invalid data analysis.

In a possible implementation, the method further includes: sending, to the second communication apparatus, information about an analytic status of the first management data analytic module, where the analytic status indicates a status of performing the analytic operation by the first management data analytic module.

In the foregoing implementation, the first communication apparatus may notify the second communication apparatus of the analytic status of data analysis in time. In addition, after determining, based on the analytic status, that the first communication apparatus completes analysis, the second communication apparatus may obtain an analytic result from the first communication apparatus in time, which helps improve timeliness of obtaining the analytic result by the second communication apparatus.

In a possible implementation, the method further includes: receiving a query request from the second communication apparatus, where the query request includes the identity of the first management data analytic module, and the identity of the first management data analytic module is used to request the analytic result of the first management data analytic module.

In the foregoing implementation, the first communication apparatus may send the analytic result to the second communication apparatus after receiving the query request of the second communication apparatus, to prevent the first communication apparatus from directly sending the analytic result to the second communication apparatus, which further improves pertinence of the analytic result obtained by the second communication apparatus.

In a possible implementation, the query request further includes an identity of a first type of analytic result or a second type of analytic result to which the first analytic result belongs. The first type of analytic result represents an analytic result currently obtained by the first management data analytic module, and the second type of analytic result represents an analytic result historically obtained by the first management data analytic module.

In the foregoing implementation, the analytic result may be categorized into the historical analytic result or the current analytic result, and the second communication apparatus may flexibly obtain the historical analytic result or the current analytic result from the first communication apparatus.

In a possible implementation, the first communication apparatus is the domain management unit in the autonomous network, the second communication apparatus is the cross domain management unit in the autonomous network, the domain management unit is configured to manage one or more network elements, and the cross domain management unit is configured to manage a plurality of network elements. Alternatively, the first communication apparatus is the cross domain management unit in the autonomous network, the second communication apparatus is the service operation unit in the autonomous network, the cross domain management unit is configured to manage a plurality of network elements, and the service operation unit is configured to manage one or more services implemented by the plurality of network elements. Alternatively, the first communication apparatus is the service operation unit in the autonomous network, the second communication apparatus is a third-party system other than the autonomous network, and the service operation unit is configured to manage one or more services implemented by a plurality of network elements.

In the foregoing implementations, a plurality of implementations of the first communication apparatus and the second communication apparatus are provided.

According to a second aspect, an embodiment of this application provides a management method for a management data analytic module. The method may be performed by a second communication apparatus, or may be performed by a chip system. The chip system may implement functions of the second communication apparatus. The second communication apparatus is, for example, a domain management unit in an autonomous network, a service operation unit in an autonomous network, or a service operation unit. The method includes: receiving first information from a first communication apparatus, where the first information includes an identity and capability information of a first management data analytic module, the first management data analytic module is disposed in the first communication apparatus, and the first management data analytic module is configured to analyze information about a network element; sending second information to the first communication apparatus, where the second information includes the identity and control information of the first management data analytic module, and the control information is used to configure a running parameter of the first management data analytic module; and receiving a first analytic result from the first communication apparatus, where the first analytic result is determined by the first management data analytic module.

In a possible implementation, the first information includes identities and capability information of a plurality of management data analytic modules. The plurality of management data analytic modules include the first management data analytic module. The method further includes: determining the first management data analytic module from the plurality of management data analytic modules.

In the foregoing implementation, the second communication apparatus may determine, from the plurality of management data analytic modules according to a requirement, the first management data analytic module required by the second communication apparatus, to prevent the plurality of management data analytic modules in the first communication apparatus from performing invalid data analysis.

In a possible implementation, the capability information of the first management data analytic module includes one or more of the following: a capability identity, where the capability identity indicates a capability of the first management data analytic module; information about supported analytic data; or information about a supported analytic operation.

In a possible implementation, the analytic data includes one or more of the following: coverage analytic data, where the coverage analytic data includes related data for analyzing coverage of a signal sent by the network element; mobility analytic data, where the mobility analytic data includes related data for analyzing handover of a terminal device between network elements; energy saving analytic data, where the energy saving analytic data includes related data for analyzing energy saving of the network element; service quality analytic data, where the service quality analytic data includes related data for analyzing service quality of the network element; rate analytic data, where the rate analytic data includes related data for analyzing a data transmission rate of the network element; or capacity analytic data, where the capacity analytic data includes related data for analyzing a capacity of the network element.

In a possible implementation, the analytic operation includes one or more of the following: a problem identification operation, where the problem identification operation is used to identify a problem existing in a network; a root cause analytic operation, where the root cause analytic operation is used to identify a cause of a problem occurring in a network; or an analytic solution adjustment operation, where the analytic solution adjustment operation is used to analyze an adjustment method of network information.

In a possible implementation, the control information includes: information about an analytic scope, where the analytic scope indicates at least one network element; information about analytic time, where the analytic time indicates time at which the first management data analytic module performs the analytic operation; or capability enabling information, where the capability enabling information is used to enable a part of or all capabilities of the first management data analytic module.

In a possible implementation, the method further includes: receiving, from the first communication apparatus, information about an analytic status of the first management data analytic module, where the analytic status indicates a status of performing the analytic operation by the first management data analytic module.

In a possible implementation, the method further includes: sending a query request to the first communication apparatus, where the query request includes the identity of the first management data analytic module, and the identity of the first management data analytic module is used to request an analytic result of the first management data analytic module.

In a possible implementation, the query request further includes an identity of a first type of analytic result or a second type of analytic result to which the first analytic result belongs. The first type of analytic result represents an analytic result currently obtained by the first management data analytic module, and the second type of analytic result represents an analytic result historically obtained by the first management data analytic module.

In a possible implementation, the first communication apparatus is the domain management unit in the autonomous network, the second communication apparatus is a cross domain management unit in the autonomous network, the domain management unit is configured to manage one or more network elements, and the cross domain management unit is configured to manage a plurality of network elements. Alternatively, the first communication apparatus is a cross domain management unit in the autonomous network, the second communication apparatus is the service operation unit in the autonomous network, the cross domain management unit is configured to manage a plurality of network elements, and the service operation unit is configured to manage one or more services implemented by the plurality of network elements. Alternatively, the first communication apparatus is the service operation unit in the autonomous network, the second communication apparatus is a third-party system other than the autonomous network, and the service operation unit is configured to manage one or more services implemented by a plurality of network elements.

According to a third aspect, an embodiment of this application provides a communication apparatus. The communication apparatus may be the first communication apparatus in the first aspect, or a software module configured in the first communication apparatus, or an electronic device (for example, a chip system) that may implement functions of the first communication apparatus, or a large device including the first communication apparatus. The communication apparatus includes a corresponding means (means) or module configured to perform the first aspect or any optional implementation. For example, the communication apparatus includes a transceiver module (also referred to as a transceiver unit sometimes) and a processing module (also referred to as a processing unit sometimes).

For example, the transceiver module is configured to: send first information to a second communication apparatus, where the first information includes an identity and capability information of a first management data analytic module, the first management data analytic module is disposed in the first communication apparatus, and the first management data analytic module is configured to analyze information about a network element; and receive second information from the second communication apparatus, where the second information includes the identity and control information of the first management data analytic module, and the control information is used to configure a running parameter of the first management data analytic module. The processing module is configured to analyze information about at least one network element by using the first management data analytic module, to obtain a first analytic result. The transceiver module is further configured to send the first analytic result to the second communication apparatus.

According to a fourth aspect, an embodiment of this application provides a communication apparatus. The communication apparatus may be the second communication apparatus in the second aspect, or a software module configured in the second communication apparatus, or an electronic device (for example, a chip system) that may implement functions of the second communication apparatus, or a large device including the second communication apparatus. The communication apparatus includes a corresponding means (means) or module configured to perform the second aspect or any optional implementation. For example, the communication apparatus includes a receiving module (also referred to as a receiving unit sometimes) and a sending module (also referred to as a sending unit sometimes).

For example, the receiving module is configured to receive first information from a first communication apparatus, where the first information includes an identity and capability information of a first management data analytic module, the first management data analytic module is disposed in the first communication apparatus, and the first management data analytic module is configured to analyze information about a network element. The sending module is configured to send second information to the first communication apparatus, where the second information includes the identity and control information of the first management data analytic module, and the control information is used to configure a running parameter of the first management data analytic module. The receiving module is further configured to receive a first analytic result from the first communication apparatus, where the first analytic result is determined by the first management data analytic module.

Optionally, the communication apparatus further includes a processing module (which may also be referred to as a processing unit sometimes). For example, the first information includes identities and capability information of a plurality of management data analytic modules, and the processing unit is configured to determine the first management data analytic module from the plurality of management data analytic modules.

According to a fifth aspect, an embodiment of this application provides a communication system, including the apparatus in the third aspect and the apparatus in the fourth aspect.

According to a sixth aspect, an embodiment of this application provides a communication apparatus, including a processor and a communication interface. The communication interface is configured to: receive a signal from an apparatus other than the communication apparatus and transmit the signal to the processor, or send a signal from the processor to an apparatus other than the communication apparatus. The processor implements the method according to either of the first aspect or the second aspect by using a logic circuit executing code instructions.

Optionally, the communication apparatus further includes other components, for example, an antenna and an input/output module. The components may be hardware, software, or a combination of software and hardware.

According to a seventh aspect, an embodiment of this application provides a chip system. The chip system includes a processor and an interface. The processor is configured to invoke instructions from the interface and run the instructions. When the processor executes the instructions, the method according to either of the first aspect or the second aspect is implemented.

According to an eighth aspect, an embodiment of this application provides a computer-readable storage medium. The computer-readable storage medium is configured to store a computer program or instructions. When the computer program or the instructions are run, the method according to either of the first aspect or the second aspect is implemented.

According to a ninth aspect, an embodiment of this application provides a computer program product including instructions. When the computer program product is run on a computer, the method according to either of the first aspect or the second aspect is implemented.

For beneficial effects of the second aspect to the ninth aspect, refer to the content described in the first aspect. Details are not described herein again.

### BRIEF DESCRIPTION OF DRAWINGS

FIG. 1 is a diagram of an architecture of an autonomous network to which an embodiment of this application is applicable;
FIG. 2 is a diagram of an application scenario according to an embodiment of this application;
FIG. 3 is a schematic flowchart of a data analysis method according to an embodiment of this application;
FIG. 4 is a schematic flowchart of another data analysis method according to an embodiment of this application; and
FIG. 5 to FIG. 8 are diagrams of structures of four communication apparatuses according to embodiments of this application.

### DESCRIPTION OF EMBODIMENTS

To make objectives, technical solution, and advantages of embodiments of this application clearer, the following further describes embodiments of this application in detail with reference to the accompanying drawings.

The following describes terms used in embodiments of this application.
1. A network element is a function unit that provides a network service, and includes a core network element, an access network element, and/or the like.

The core network element includes but is not limited to an access and mobility management function (access and mobility management function, AMF) network element, a session management function (session management function, SMF) network element, a policy control function (Policy Control Function, PCF) network element, a network data analytical function (network data analytical function, NWDAF) network element, a network repository function (network repository function, NRF) network element, a network storage function (network repository function, NRF), or the like.

The access network element includes but is not limited to a radio access device in various standards, for example, may be a next-generation NodeB (next-generation NodeB, gNB) in an NR system, may be an evolved NodeB (evolved NodeB, eNB), a radio network controller (radio network controller, RNC), or a NodeB (NodeB, NB), may be a gNB or a transmission point (transmission point, TP/TRP) in a 5^{th} generation (5^{th} generation, 5G) communication system, or one or a group of antenna panels (including a plurality of antenna panels) of a base station in a 5G system, or may be a network node that forms a gNB or a transmission point, for example, a baseband device (BBU), a central control unit (central unit control panel, CUCP), a central user panel unit (central unit user panel, CUUP), a central unit (central unit, CU), or a distributed unit (distributed unit, DU).

2. A terminal device may be referred to as user equipment (user equipment, UE), a terminal, an access station, a UE station, a remote station, a wireless communication device, a user apparatus, or the like. The terminal device is a device having a wireless transceiver function, and may be a fixed device, a mobile device, a hand-held device, a wearable device, a vehicle-mounted device, or a wireless apparatus (for example, a communication module or a chip system) built in the foregoing device. The terminal device is configured to connect to a person, an object, a machine, and the like, and may be widely used in various scenarios. For example, the terminal device includes but is not limited to a terminal device used in the following scenarios: cellular communication, device-to-device (device-to-device, D2D) communication, vehicle to everything (vehicle to everything, V2X), machine-to-machine/machine-type communication (machine-to-machine/machine-type communication, M2M/MTC), an internet of things (internet of things, IoT), virtual reality (virtual reality, VR), augmented reality (augmented reality, AR), industrial control (industrial control), self driving (self driving), telemedicine (remote medical), a smart grid (smart grid), smart furniture, a smart office, smart wearable, smart transportation, a smart city (smart city), an uncrewed aerial vehicle, a robot, and the like. The terminal may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A specific technology and a specific device form used by the terminal device are not limited in embodiments of this application.

3. An autonomous network (autonomous network) is a network that can implement, with minimal human intervention, self-control based on an autonomy capability (the autonomous network is able to be governed by itself with minimal to no human intervention). A telecommunication system (telecommunication system) may be considered as an autonomous network. The telecommunication system includes a telecommunication network (telecommunication network) and an operation management system (management system) of the telecommunication network. Magnitude of a capability of the autonomous network to implement self-control may be represented by an autonomous network level (autonomous network level).

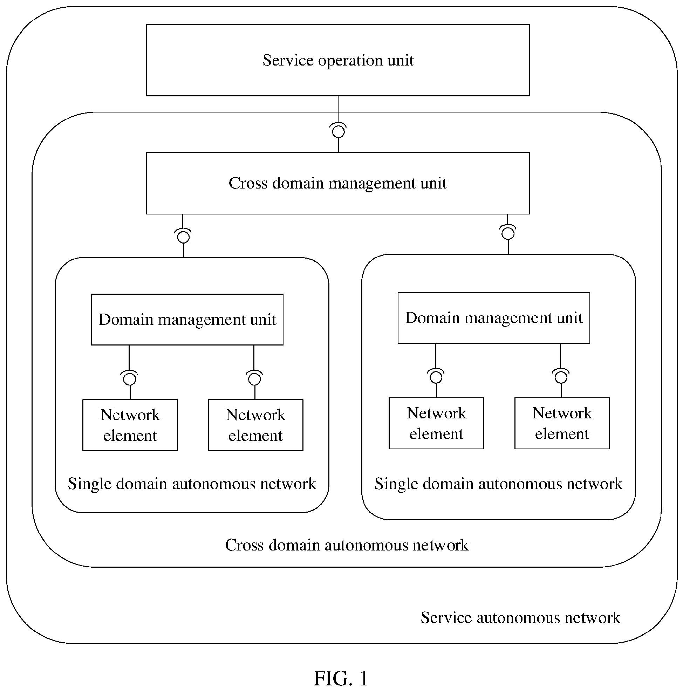

A data analysis method provided in embodiments of this application may be applied to the autonomous network. FIG. 1 is a diagram of an architecture of an autonomous network to which an embodiment of this application is applicable. As shown in FIG. 1, the autonomous network includes at least one network element, a domain management unit, a cross domain management unit, and a service operation unit.

The at least one network element may include a core network element and/or an access network element. For implementation forms of the core network element and the access network element, refer to the foregoing content.

The domain management unit may also be referred to as a domain management function unit, a subnetwork management function (subnetwork management function, NMF) unit, or a network element management function (network element/function management function) unit. The domain management unit may be configured to perform subnetwork or network element lifecycle management, subnetwork or network element deployment, subnetwork or network element fault management, subnetwork or network element performance management, subnetwork or network element assurance, subnetwork or network element optimization management, subnetwork or network element intent translation, subnetwork or network element management data analysis, and the like. A subnetwork includes one or more network elements. Alternatively, a subnetwork may include one or more subnetworks. That is, the one or more subnetworks form a subnetwork with a larger coverage area.

The cross domain management unit may also be referred to as a cross domain management function unit or a network management function (network management function, NMF) unit. The cross domain management unit is configured to manage a plurality of network elements. The cross domain management unit may be referred to as a network management function (network management function, NMF) unit, or may be a network slice management function (network slice management function, NSMF) unit, a cross domain management data analytical function (management data analytical function, MDAF) unit, a cross domain self-organization network function (self-organization network function, SON Function) unit, a cross domain intent management function unit, or the like, which is referred to as the cross domain management function unit in embodiments of this application for ease of description.

The cross domain management unit may be specifically configured to perform network lifecycle management, network deployment, network fault management, network performance management, network configuration management, network assurance, a network optimization function, and subnetwork intent (intent) translation, where fault management includes but is not limited to fault collection, fault identification, root cause analysis, fault handling, and the like. A network may include a plurality of network elements, or a network may include one or more subnetworks.

The network in embodiments of this application may be a network in a technical domain, and the technical domain may be understood as being for implementing a specific function or some specific functions. For example, the network may be a radio access network or a core network. Alternatively, the network in embodiments of this application may be a network in a standard, for example, a network in a 5G communication system. Alternatively, the network in embodiments of this application may be a network provided by a device vendor, for example, a network provided by a device vendor X. Alternatively, the network in embodiments of this application may be a network in a geographical area, for example, a network of a factory A or a network of a city.

For example, the service operation unit may also be referred to as a communication service management function (communication service management function) unit. The service operation unit is configured to manage one or more services implemented by the plurality of network elements, and may be oriented to an operator business and service, and provide functions and services such as charging, settlement, accounting, customer service, business, and network monitoring. The service operation unit includes an operational system of an operator or an operational system of a vertical industry (vertical operational technology system). For example, the service operation unit includes a business support system (business support system, BSS).

In a possible implementation, the autonomous network may be sequentially divided into a single domain autonomous network, a cross domain autonomous network, and a service autonomous network in ascending order of a range of the autonomous network. The single domain autonomous network includes the network element and the domain management unit. The cross domain autonomous network includes the network element, the domain management unit, and the cross domain management unit. The service autonomous network includes the network element, the domain management unit, the cross domain management unit, and the service operation unit.

The autonomous network in embodiments of this application may be considered as a network of a service-oriented management architecture. The service-oriented management architecture includes two roles: a management service producer (management service producer, MnS Producer) and a management service consumer (management service consumer, MnS Consumer). When the autonomous network is considered as a network of the service-oriented management architecture, a corresponding device in the autonomous network may also be correspondingly considered as one of the two roles. The following describes examples.

For example, when the domain management function unit provides a management service, the domain management function unit may be considered as the management service producer, and the cross domain management function unit may be considered as the management service consumer.

For another example, when the cross domain management function unit provides a management service, the cross domain management function unit may be considered as the management service producer, and the service operation unit may be considered as the management service consumer.

For another example, when the service operation unit provides a management service, the service operation unit may be considered as the management service producer, and a third-party system may be considered as the management service consumer. The third-party system is, for example, an enterprise system or another service operator system. The another service operator system is an operator system other than an operator system corresponding to the service operation unit.

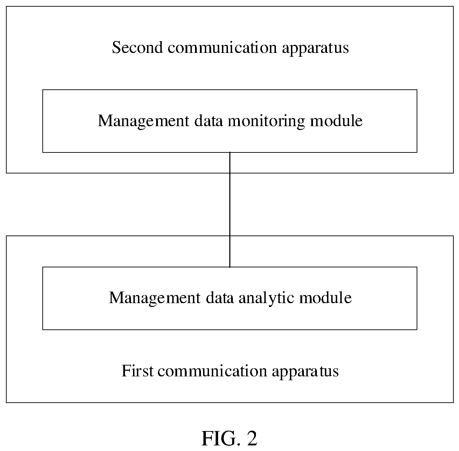

FIG. 2 is a diagram of an application scenario according to an embodiment of this application, or FIG. 2 may be understood as a diagram of an architecture of a communication system. As shown in FIG. 2, the communication system includes a first communication apparatus and a second communication apparatus, and the first communication apparatus and the second communication apparatus may communicate with each other. At least one management data analytic (management data analytic, MDA) module may be deployed in the first communication apparatus. A management data monitoring module may be deployed in the second communication apparatus.

The management data analytic (management data analytic, MDA) module may also be referred to as a management data analytic execution module, for example, a management data analytical function (management data analytical function, MDAF) module. The management data analytic module is configured to analyze information about a network element to obtain an analytic result. The management data monitoring module may also be referred to as a management data analytic monitoring module, and is configured to receive the analytic result from the management data analytic module.

The management data analytic module may be a software program or module, or may be hardware. Similarly, the management data monitoring module may also be a software program or module, or may be hardware.

Optionally, any management data analytic module in the first communication apparatus may communicate with the management data analytic monitoring module in the second communication apparatus through an interface of the management data analytic module. The interface may be a logical interface configured according to a protocol.

The first communication apparatus and the second communication apparatus may be implemented in a plurality of manners. For example, the first communication apparatus is a domain management unit, and the second communication apparatus is a cross domain management unit. Alternatively, the first communication apparatus is a cross domain management unit, and the second communication apparatus is a service operation unit. Alternatively, the first communication apparatus is a service operation unit, and the second communication apparatus is a third-party system. For an implementation of the third-party system, refer to the content described above.

In a possible implementation, the communication system shown in FIG. 2 may be considered as a system of a service-oriented management architecture. In this case, the first communication apparatus or the management data analytic module in the first communication apparatus may be considered as a management service producer, and the second communication apparatus or the management data monitoring module in the second communication apparatus may be considered as a management service consumer.

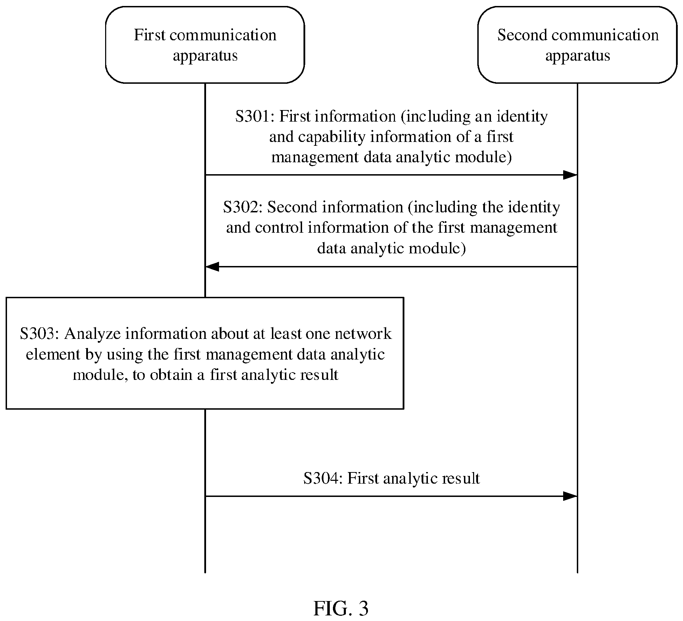

FIG. 3 is a flowchart of a data analysis method according to an embodiment of this application. A first communication apparatus in the embodiment shown in FIG. 3 is, for example, the first communication apparatus in the embodiment shown in FIG. 2. A second communication apparatus in the embodiment shown in FIG. 3 is, for example, the second communication apparatus in the embodiment shown in FIG. 2. A management data analytic module in the embodiment shown in FIG. 3 is, for example, the management data analytic module in the embodiment shown in FIG. 2. A management data monitoring module in the embodiment shown in FIG. 3 is, for example, the management data monitoring module in the embodiment shown in FIG. 2.

S301: The first communication apparatus sends first information to the second communication apparatus. Correspondingly, the second communication apparatus receives the first information from the first communication apparatus. The first information includes an identity and capability information of a first management data analytic module.

For example, the first communication apparatus may be loaded (or installed) with the first management data analytic module. For example, the first management data analytic module is a software module, and the first communication apparatus may be installed with the first management data analytic module based on an installation operation of a user. The first management data analytic module may be considered as a management data analytic object (object) of the first communication apparatus.

The first communication apparatus may determine the identity (identity, ID) and the capability (capability) information of the first management data analytic module. The identity of the first management data analytic module may also be referred to as an identity of the management data analytic object. The capability information of the first management data analytic module indicates a capability of the first management data analytic module. The capability information of the first management data analytic module includes one or more of the following 1 to 3.
1. Capability identity. The capability identity indicates the capability of the first management data analytic module.
   For example, the first communication apparatus may be preconfigured with identities of a plurality of capabilities, and the first communication apparatus determines the capability identity of the first management data analytic module based on one or more capabilities of the first management data analytic module. Alternatively, the first management data analytic module has the capability identity of the first management data analytic module, and the first communication apparatus obtains the capability identity from the first management data analytic module. The identities of the plurality of capabilities may be configured in the first management data analytic module manually or according to a protocol. The capability identity of the first management data analytic module may also be configured in the first management data analytic module manually or according to a protocol.
2. Information about supported analytic data. The information about the analytic data indicates data whose analysis can be supported by the first management data analytic module.

The analytic data includes one or more of the following: coverage (coverage) analytic data, mobility analytic data, energy saving analytic data, service quality analytic data, rate analytic data, and capacity analytic data. The following describes the data.

The coverage analytic data includes related data for analyzing a coverage situation of a signal sent by a network element. The first management data analytic module supports the coverage analytic data, and the first management data analytic module may analyze at least one problem of the following A1 to A5.

A1: Weak coverage (weak coverage), which means that strength of the signal received by a terminal device in an area from the network element is less than a first threshold. A value of the first threshold may be configured in the first communication apparatus manually or according to a protocol. The strength of the signal received by the terminal device from the network element is, for example, represented by received signal channel strength (received signal channel power, RSCP) or reference signal received power (reference signal received power, RSRP). If the strength of the signal received by the terminal device from the network element is represented by the RSCP, the first threshold is, for example, -85 decibels relative to one milliwatt (decibels relative to one milliwatt, dbm). If the strength of the signal received by the terminal device from the network element is represented by the RSRP, the first threshold is, for example, -100 dbm.

A2: Coverage hole (coverage hole), which means that an area is not covered by a signal sent by any network element.

A3: Pilot pollution (pilot pollution), which means that a terminal device receives pilot signals from a plurality of network elements, but in terms of strength, none of the pilot signals of the plurality of network elements can serve as a primary pilot signal.

A4: Overshoot coverage (overshoot coverage), which means exceeding a set coverage area. Overshoot coverage may be caused by signaling congestion in a network and call drops and frequent handovers of a type of a traffic channel (traffic channel, TCH) that are caused by signal interference.

A5: Downlink uplink channel coverage mismatch (downlink uplink channel coverage mismatch), which means that a difference between signal strength of the signal received by a terminal device from the network element and signal strength of a signal received by the network element from the terminal device is greater than or equal to a second threshold. For a configuration manner of the second threshold, refer to the foregoing content of configuring the first threshold. Details are not described herein again. For example, the second threshold is 10 db.

The mobility analytic data includes related data for analyzing handover of a terminal device between network elements. The first management data analytic module supports analysis of the mobility analytic data, and the first management data analytic module may analyze at least one problem of the following B1 to B4.

B1: Duration required for handing over the terminal device from one network element to another network element is less than a third threshold. In other words, the terminal device is handed over from the one network element to the another network element prematurely. For a configuration manner of the third threshold, refer to the foregoing content of configuring the first threshold. Details are not described herein again. For example, the third threshold is 1 second (s).

B2: A frequency at which the terminal device is handed over from one network element to another network element is greater than or equal to a fourth threshold. In other words, the terminal device is handed over between the two network elements excessively frequently. For a configuration manner of the fourth threshold, refer to the foregoing content of configuring the first threshold. Details are not described herein again. For example, the fourth threshold is 10 times/hour (h).

B3: Duration of disconnection between the terminal device and the network element is greater than or equal to a fifth threshold. For a configuration manner of the fifth threshold, refer to the foregoing content of configuring the first threshold. Details are not described herein again. For example, the fifth threshold is 1 minute (minute, min).

B4: A handover parameter in a process in which the terminal device is handed over from one network element to another network element is inappropriate.

The energy saving analytic data includes related data for analyzing energy saving of the network element. The first management data analytic module supports analysis of the energy saving analytic data, and the first management data analytic module may analyze at least one problem of the following C1 and C2.

C1: Energy consumption of the network element is greater than or equal to a sixth threshold. For a configuration manner of the sixth threshold, refer to the foregoing content of configuring the first threshold. Details are not described herein again. The sixth threshold is, for example, 20 kWh (kWh) /site/day.

C2: Energy efficiency of the network element is less than a seventh threshold. For a configuration manner of the seventh threshold, refer to the foregoing content of configuring the first threshold. Details are not described herein again. For example, the seventh threshold is 100 MB/kWh.

The service quality analytic data includes related data for analyzing service quality of the network element. Optionally, the service quality analytic data includes voice quality analytic data, and the voice quality analytic data is used to analyze voice quality provided by the network element. The first management data analytic module supports analysis of the voice quality analytic data, and the first management data analytic module may analyze at least one problem of D1 and D2.

D1: A call drop rate is greater than or equal to an eighth threshold. The call drop rate may also be referred to as a call interruption rate, and is a probability of unexpected interruption of communication between the terminal device and the network element. For a configuration manner of the eighth threshold, refer to the foregoing content of configuring the first threshold. Details are not described herein again.

D2: Voice interruption time is greater than or equal to a ninth threshold. For a configuration manner of the ninth threshold, refer to the foregoing content of configuring the first threshold. Details are not described herein again.

The rate analytic data includes related data for analyzing a data transmission rate of the network element. The first management data analytic module supports analysis of the rate analytic data, and the first management data analytic module may analyze at least one problem of the following E1 and E2.

E1: An average rate of the network element is less than a tenth threshold. For a configuration manner of the tenth threshold, refer to the foregoing content of configuring the first threshold. Details are not described herein again.

E2: A quantity of terminal devices connected to the network element is greater than or equal to a quantity represented by an eleventh threshold. For a configuration manner of the eleventh threshold, refer to the foregoing content of configuring the first threshold. Details are not described herein again.

The capacity analytic data includes related data for analyzing a capacity of the network element. The first management data analytic module supports analysis of the capacity analytic data, and the first management data analytic module may analyze at least one problem of the following F1 and F2.

F1: Load of the network element is greater than or equal to a twelfth threshold. For example, the load of the network element may be represented by a quantity of terminal devices that the network element provides a service for. For a configuration manner of the twelfth threshold, refer to the foregoing content of configuring the first threshold. Details are not described herein again.

F2: A traffic congestion rate is greater than or equal to a thirteenth threshold. For a configuration manner of the thirteenth threshold, refer to the foregoing content of configuring the first threshold. Details are not described herein again. The traffic congestion rate may be represented by a ratio of a quantity of current calls of the network element to a quantity of calls that can be supported by the network element.

3. Information about a supported analytic operation.

The analytic operation indicates an analytic task (analytic task) or an analytical function that can be supported by the first management data analytic module. It may be further understood that a data analysis process relates to a plurality of analytic tasks, and the information about the analytic operation indicates the analytic task that can be supported by the first management data analytic module. The analytic operation includes one or more of the following: a problem determining operation, a root cause analytic operation, and an analytic solution adjustment operation.

A problem identification operation may also be referred to as the problem determining operation, a problem prediction operation, a problem demarcation operation, or the like, and is used to identify (or determine) a problem existing in a network. The root cause analytic operation is used to identify a cause of the problem occurring in the network. The analytic solution adjustment operation is used to analyze an adjustment method (or solution, or manner) of network information. The analytic solution adjustment operation may be further understood as using a plurality of methods to analyze one piece of data, or using different methods to analyze different data. The network includes one or more network elements.

The following describes the capability information of the first management analytic module by using examples.

Example 1: The capability information of the first management data analytic module is specifically that a type of the supported analytic data is a coverage analysis type, analysis of two problems of weak coverage and the coverage hole can be supported, and the supported analytic operations include the problem identification operation and the root cause analytic operation.

Example 2: The capability information of the first management data analytic module is specifically that a type of the supported analytic data is a coverage analysis type, analysis of three problems of weak coverage, the coverage hole, and overshoot coverage can be supported, and the supported analytic operations include the problem identification operation, the root cause analytic operation, and the analytic solution adjustment operation.

Example 3: The capability information of the first management data analytic module is specifically that a type of the supported analytic data is an energy saving analysis type, analysis of two problems of high energy consumption and low energy efficiency can be supported, and the supported analytic operations include the problem identification operation and the root cause analytic operation.

Optionally, the first information further includes provider information of the first management data analytic module. The provider information indicates a provider that produces the first management data analytic module.

Optionally, when the first management data analytic module is a software program or module, the first information further includes version information of the first management data analytic module.

S302: The second communication apparatus sends second information to the first communication apparatus. Correspondingly, the first communication apparatus receives the second information from the second communication apparatus. The second information includes the identity and control information (control information) of the first management data analytic module.

The control information of the first management data analytic module is used to configure (or manage or control) a running parameter of the first management data analytic module.

Optionally, the control information of the first management data analytic module includes one or more of the following: information about an analytic scope (analytic scope), information about analytic time, and capability enabling information.

The analytic scope indicates at least one network element that needs to be analyzed by the first management data analytic module, and may also be further understood as a source of information that needs to be analyzed by the first management data analytic module. For example, the information about the analytic scope includes a cell list, a network element list, a tracking area (tracking area, TA) list, a geographical area, or the like. The analytic scope may be considered as a running parameter of the first management data analytic module.

The analytic time indicates time at which the first management data analytic module performs the analytic operation. The analytic time is, for example, an analytic period (analytic period) or specific time. The analytic period indicates a period in which the first management data module performs the analytic operation, for example, every hour, every day, or every week. The specific time is, for example, a holiday or a day. The analytic time may be considered as a running parameter of the first management data analytic module.

The capability enabling information indicates to enable a part of or all capabilities of the first management data analytic module, or it may be understood as that the capability enabling information indicates capabilities of the first management data analytic module that need to be used by the second communication apparatus. The capability start information may be information about a part of or all capabilities, of the first management data analytic module, enabled by the second communication apparatus. In another possible implementation, when the control information of the first management data analytic module does not include the capability enabling information, the first communication apparatus may determine to enable all the capabilities of the first management data analytic module. Enabling a part of or all capabilities of the first management data analytic module may be considered as a running parameter of the first management data analytic module.

Optionally, the control information of the first management data analytic module further includes switch (switch) information. The switch information indicates the first management data analytic module to be started or closed. The switch information may also be considered as a running parameter of the first management data analytic module.

When the control information of the first management data analytic module includes the information about the analytic time, it is equivalent to that the second communication apparatus indicates working time of the first management data analytic module. In this case, it is equivalent to that the information about the analytic time indicates the switch information of the first management data analytic module. In this case, the control information of the first management data analytic module may not include the switch information.

For example, the second communication apparatus may determine, based on the capability information of the first management data analytic module, the control information of the first management data analytic module that meets requirement information. The requirement information may be manually configured by the user in the second communication apparatus, or may be received by the second communication apparatus from another device. The another device is a device other than the first communication apparatus and the second communication apparatus, for example, an operation support system (operation support system, OSS). Alternatively, the second communication apparatus may send the first information to another device, and receive the control information of the first management data analytic module from the another device.

S303: The first communication apparatus analyzes information about the at least one network element by using the first management data analytic module, to obtain a first analytic result.

The first communication apparatus configures running of the first management data analytic module based on the control information of the first management data analytic module, and analyzes the information about the at least one network element by using the first management data analytic module, to obtain the first analytic result. If the control information of the first management data analytic module includes different content, the first communication apparatus configures running of the first management data analytic module in different manners, which are separately described in the following.

Example 1: The control information of the first management data analytic module includes the information about the analytic time or the switch information.

The first communication apparatus determines, based on the information about the analytic time or the switch information, time for running the first management data analytic module, and runs the first management data analytic module at the determined time.

Example 2: The control information of the first management data analytic module includes the capability enabling information.

The first communication apparatus determines, based on the capability enabling information, at least one type of analytic data that needs to be analyzed by the first management data analytic module.

Example 3: The control information of the first management data analytic module includes the information about the analytic scope.

The first communication apparatus determines, based on the analytic scope, the at least one network element that needs to be analyzed by the first management data analytic module.

Example 4: The control information of the first management data analytic module includes the information about the analytic scope and the capability enabling information.

The first communication apparatus determines, based on the analytic scope, the at least one network element that needs to be analyzed by the first management data analytic module, and determines, based on the capability enabling information, to enable a part of or all capabilities of the first management data analytic module.

Example 5: The control information of the first management data analytic module includes the information about the analytic time and the capability enabling information.

The first communication apparatus determines, based on the information about the analytic time, time for running the first management data analytic module, and determines, based on the capability enabling information, to enable a part of or all capabilities of the first management data analytic module.

Example 6: The control information of the first management data analytic module includes the information about the analytic scope, the information about the analytic time, and the capability enabling information.

The first communication apparatus determines, based on the information about the analytic time, time for running the first management data analytic module, determines, based on the analytic scope, the at least one network element that needs to be analyzed by the first management data analytic module, and determines, based on the capability enabling information, to enable a part of or all capabilities of the first management data analytic module.

When the control information of the first management data analytic module includes the capability enabling information, the first communication apparatus may determine, based on the capability enabling information, the at least one type of analytic data that needs to be analyzed by the first management data analytic module, and obtain data of the at least one type of analytic data from the at least one network element, which is equivalent to obtaining the information about the at least one network element.

Alternatively, for example, when the control information of the first management data analytic module does not include the capability enabling information, the first communication apparatus may determine at least one type of analytic data that may be supported by the first management data analytic module, and obtain data of the at least one type of analytic data from the at least one network element, which is equivalent to obtaining the information about the at least one network element.

The first management data analytic module analyzes the information about the at least one network element, to obtain the first analytic result. The first analytic result indicates information about a problem analyzed by the first management data analytic module. The first analytic result includes one or more of the following: a problem identity, a problem type, problem occurrence time, a problem occurrence location and/or range, a problem occurrence cause (or root cause), a problem rectification suggestion, and a quantity of problems.

In a possible implementation, the first communication apparatus may store the first analytic result in association with the identity of the first management data analytic module, so that the first communication apparatus subsequently searches for the first analytic result based on the identity of the first management data analytic module.

S304: The first communication apparatus sends the first analytic result to the second communication apparatus. Correspondingly, the second communication apparatus receives the first analytic result from the first communication apparatus.

The first communication apparatus may send the first analytic result to the second communication apparatus after obtaining the first analytic result. Alternatively, the first communication apparatus may send the first analytic result to the second communication apparatus after receiving a query request from the second communication apparatus.

Optionally, the query request includes the identity of the first management data analytic module, and the identity of the first management data analytic module is used to request an analytic result of the first management data analytic module.

In this embodiment of this application, the second communication apparatus may obtain the identity and the capability information of the first management data analytic module by using the first communication apparatus, and determine the identity and the control information of the first management data analytic module based on the capability information of the first management data analytic module. This is equivalent to that the second communication apparatus may determine the first management data analytic module required by the second communication apparatus, so that the first analytic result obtained by the first management data analytic module better meets a requirement of the second communication apparatus. In addition, the first management data analytic module can run based on the control information from the second communication apparatus, so that the first management data analytic module can analyze the information about the at least one network element more pertinently, which also helps the second communication apparatus obtain a more pertinent analytic result. In addition, the first communication apparatus may start the management data analytic module according to the requirement of the second communication apparatus, and the first management data analytic module runs according to an actual requirement. This helps reduce processing resource overheads of the first communication apparatus. In addition, the first communication apparatus does not send, to the second communication apparatus, an analytic result that is not required by the second communication apparatus, which helps reduce transmission resources of the first communication apparatus.

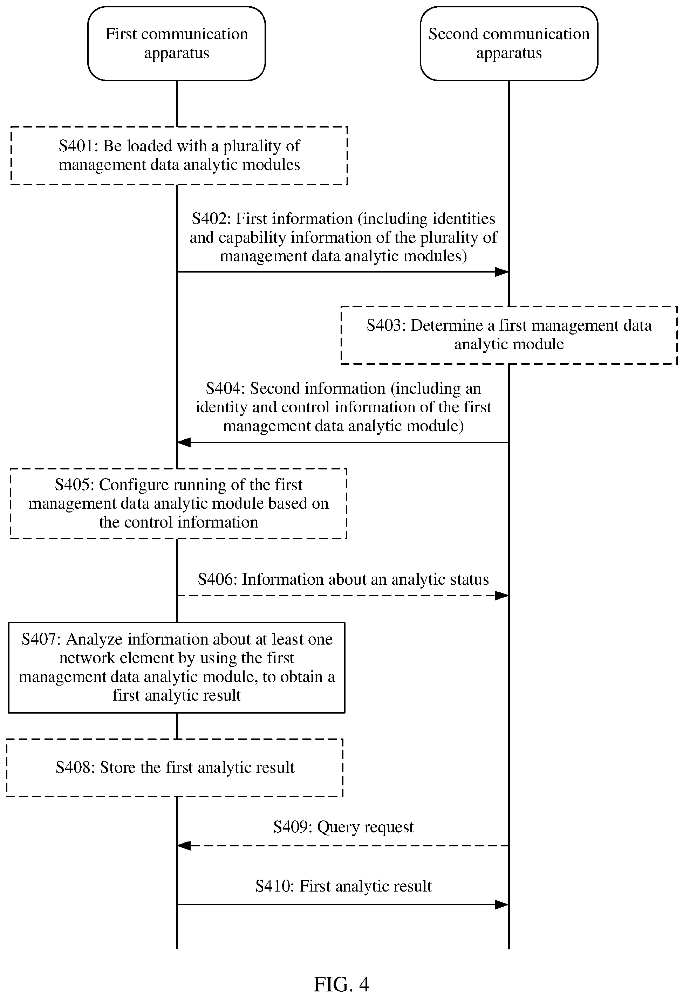

FIG. 4 is a schematic flowchart of a data analysis method according to an embodiment of this application. FIG. 4 is described by using an example in which the first communication apparatus includes a plurality of management data analytic modules. The first communication apparatus in the embodiment shown in FIG. 4 is, for example, the first communication apparatus in the embodiment shown in FIG. 2. A second communication apparatus in the embodiment shown in FIG. 4 is, for example, the second communication apparatus in the embodiment shown in FIG. 2. The management data analytic module in the embodiment shown in FIG. 4 is, for example, the management data analytic module in the embodiment shown in FIG. 2. A management data monitoring module in the embodiment shown in FIG. 4 is, for example, the management data monitoring module in the embodiment shown in FIG. 2.

S401: The first communication apparatus is loaded with the plurality of management data analytic modules.

The plurality of management data analytic modules include a first management data analytic module.

In another possible implementation, the first communication apparatus has already included the plurality of management data analytic modules, and the first communication apparatus does not need to perform S401. That is, S401 is an optional step.

S402: The first communication apparatus sends first information to the second communication apparatus. Correspondingly, the second communication apparatus receives the first information from the first communication apparatus. The first information includes identities and capability information of the plurality of management data analytic modules.

The first communication apparatus may obtain an identity and capability information of each management data analytic module in the plurality of management data analytic modules. For content of the capability information of each management data analytic module in the plurality of management data analytic modules, refer to the content of the capability information of the first management data analytic module.

For example, the first communication apparatus may simultaneously send the identities and the capability information of the plurality of management data analytic modules to the second communication apparatus. Alternatively, for example, the first communication apparatus may separately send the identity and the capability information of each management data analytic module in the plurality of management data analytic modules to the second communication apparatus.

Optionally, the first information further includes provider information of the plurality of management data analytic modules and/or version information of the plurality of management data analytic modules.

S403: The second communication apparatus determines the first management data analytic module.

The second communication apparatus may determine, based on the first information, that the first communication apparatus includes the plurality of management data analytic modules. The second communication apparatus may determine, from the plurality of management data analytic modules, a management data analytic module that performs an analytic operation. There may be one or more management data analytic modules that perform the analytic operation. In this embodiment of this application, for example, the management data analytic module that is determined by the second communication apparatus and that performs the analytic operation is the first management data analytic module.

In an example, the second communication apparatus may determine the first management data analytic module from the plurality of management data analytic modules based on requirement information. For a meaning of the requirement information and a manner in which the second communication apparatus obtains the requirement information, refer to the content described in FIG. 3.

S404: The second communication apparatus sends second information to the first communication apparatus. Correspondingly, the first communication apparatus receives the second information from the second communication apparatus. The second information includes an identity and control information of the first management data analytic module. For a meaning of the control information, refer to the content described in FIG. 3.

After determining the first management data analytic module, the second communication apparatus may determine the second information. For content of determining the second information by the second communication apparatus, refer to the content described in FIG. 3.

In another example, the second communication apparatus may send the first information to another device, and receive the second information from the another device. In this case, the second communication apparatus does not need to perform S403. That is, S403 is an optional step, and is shown by using a dashed line in FIG. 4.

S405: The first communication apparatus configures running of the first management data analytic module based on the control information.

For content of a manner of configuring running of the first management data analytic module, refer to the content described in FIG. 3.

S406: The first communication apparatus sends information about an analytic status (status) to the second communication apparatus. Correspondingly, the second communication apparatus receives the information about the analytic status from the first communication apparatus.

The information about the analytic status indicates a status of performing the analytic operation by the first management data analytic module. Optionally, the information about the analytic status indicates that the status of performing the analytic operation by the first management data analytic module is unanalyzed, being analyzed, or analyzed.

"Unanalyzed" means that the first management data analytic module has not started analysis. "Being analyzed" means that the first management data analytic module is performing analysis. "Analyzed" means that the first management data analytic module has completed analysis.

In S406, the first communication apparatus may send, to the second communication apparatus, the status of performing the analytic operation by the first management data analytic module, so that the second communication apparatus can determine in time the status of performing the analytic operation by the first management data analytic module.

Alternatively, the first communication apparatus may not need to send the information about the analytic status to the second communication apparatus. In this case, the first communication apparatus does not need to perform S406. That is, S406 is an optional step, and is shown by using a dashed line in FIG. 4.

S407: The first communication apparatus analyzes information about at least one network element by using the first management data analytic module, to obtain a first analytic result.

For the first analytic result, the information about the at least one network element, and a manner in which the first communication apparatus obtains the first analytic result, refer to the content described in FIG. 3. Details are not described herein again.

S408: The first communication apparatus stores the first analytic result.

For example, the first communication apparatus may store the identity of the first management data analytic module in association with the first analytic result.

Optionally, the first communication apparatus may be set with a first type of analytic result and a second type of analytic result. The first type of analytic result and the second type of analytic result may be considered as two objects. The first type of analytic result may also be referred to as a current analytic result object, and the second type of analytic result may also be referred to as a historical analytic result object.

The first communication apparatus allocates identities to the first type of analytic result and the second type of analytic result. The first type of analytic result represents an analytic result currently obtained by the first management data analytic module. The second type of analytic result represents an analytic result historically obtained by the first management data analytic module.

When the first communication apparatus stores the first analytic result, the first communication apparatus may determine that the first analytic result belongs to the first type of analytic result, and store the identity of the first type of analytic result in association with the first analytic result. Specifically, for example, the first communication apparatus associates the identity of the first management data analytic module, the identity of the first type of analytic result, and the first analytic result.

Optionally, each time the first management data analytic module performs the analytic operation, the first communication apparatus may move an analytic result in the first type of analytic result to the second type of analytic result. For example, when determining that the first analytic result is the first type of analytic result, the first communication apparatus may determine each analytic result included in the first type of analytic result as the second type of analytic result, and then determine the first analytic result as the first type of analytic result. The analytic result belonging to the first type of analytic result may also be referred to as a current analytic result, and an analytic result belonging to the second type of analytic result may also be referred to as a historical analytic result.

If the first communication apparatus directly sends the first analytic result to the second communication apparatus, the first communication apparatus may not need to store the first analytic result. That is, S408 is an optional step, and is shown by using a dashed line in FIG. 4.

S409: The second communication apparatus sends a query request to the first communication apparatus. Correspondingly, the first communication apparatus receives the query request from the second communication apparatus.

Optionally, the query request includes the identity of the first management data analytic module.

Optionally, the query request further includes the identity of the first type of analytic result and/or the identity of the second type of analytic result.

Alternatively, the first communication apparatus may directly send the first analytic result to the second communication apparatus after obtaining the first analytic result. In this case, S409 may not be performed. That is, S409 is an optional step.

S410: The first communication apparatus sends the first analytic result to the second communication apparatus. Correspondingly, the second communication apparatus receives the first analytic result from the first communication apparatus.

Optionally, if the query request further includes the identity of the second type of analytic result, in addition to sending the first analytic result to the second communication apparatus, the first communication apparatus may further send, to the second communication apparatus, the analytic result belonging to the second type of analytic result. In this way, the second communication apparatus may obtain the current analytic result (that is, the first analytic result), and may further obtain a previous analytic result.

In this embodiment of this application, the second communication apparatus may select the first management data analytic module in the first communication apparatus according to a requirement, without requiring all the management data analytic modules in the first communication apparatus to perform data analysis. This helps improve pertinence of performing data analysis by the first communication apparatus. In addition, the second communication apparatus may control running of the management data analytic module (for example, the first management data analytic module) in the first communication apparatus according to a requirement, so that the first management data analytic module can pertinently perform data analysis, which avoids invalid data analysis performed by the first management data analytic module, and improves resource utilization and efficiency in the first communication apparatus. In addition, the first communication apparatus may further send an execution status of the analytic result to the second communication apparatus, so that the second communication apparatus can determine a status of analytic data of the first management data analytic module in time. In addition, the second communication apparatus may further flexibly obtain the current analytic result and/or the historical analytic result of the first management data analytic module.

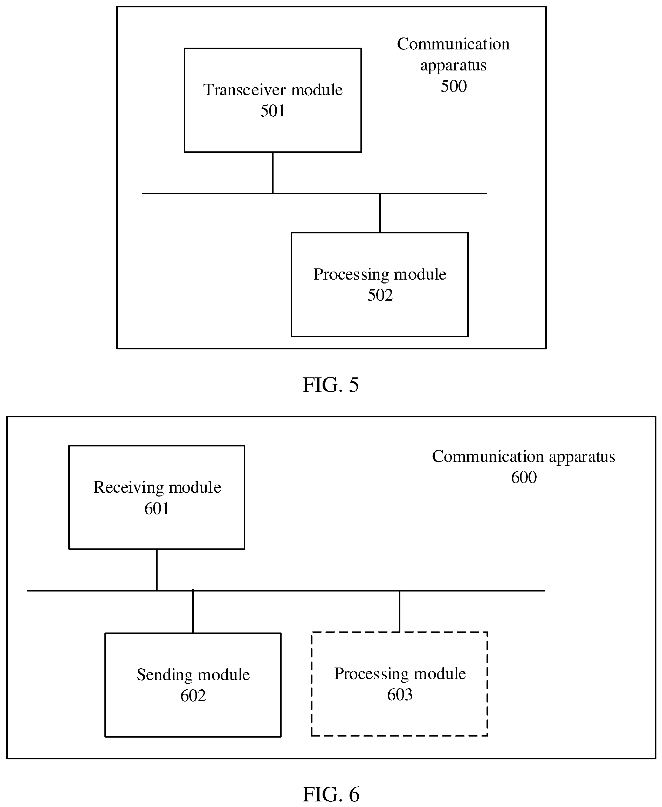

FIG. 5 is a diagram of a structure of a communication apparatus according to an embodiment of this application.

As shown in FIG. 5, the communication apparatus 500 includes a transceiver module 501 and a processing module 502. The communication apparatus 500 is configured to implement functions of the first communication apparatus in FIG. 3 or FIG. 4.

When the communication apparatus 500 is configured to implement the functions of the first communication apparatus shown in FIG. 3, the transceiver module 501 is configured to perform steps S301, S302, and S304, and the processing module 502 is configured to perform step S303.

When the communication apparatus 500 is configured to implement the functions of the first communication apparatus shown in FIG. 4, the transceiver module 501 is configured to perform steps S402, S404, and S410, and the processing module 502 is configured to perform step S407. Optionally, the transceiver module 501 is further configured to perform S406 and S409, and the processing module 502 is further configured to perform steps S405 and S407.

FIG. 6 is a diagram of a structure of a communication apparatus according to an embodiment of this application.

As shown in FIG. 6, the communication apparatus 600 includes a receiving module 601 and a sending module 602. The receiving module 601 and the sending module 602 may be coupled. Optionally, the communication apparatus 600 further includes a processing module 603, which is shown by using a dashed box in FIG. 6. The communication apparatus 600 is configured to implement functions of the second communication apparatus in FIG. 3 or FIG. 4.

When the communication apparatus 600 is configured to implement the functions of the second communication apparatus shown in FIG. 3, the receiving module 601 is configured to perform steps S301 and S304, and the sending module 602 is configured to perform step S302.

When the communication apparatus 600 is configured to implement the functions of the second communication apparatus shown in FIG. 4, the receiving module 601 is configured to perform steps S402 and S410, and the sending module 602 is configured to perform step S404.

Optionally, the receiving module 601 is further configured to perform S406, the sending module 602 is further configured to perform step S409, and the processing module 603 is further configured to perform step S403.

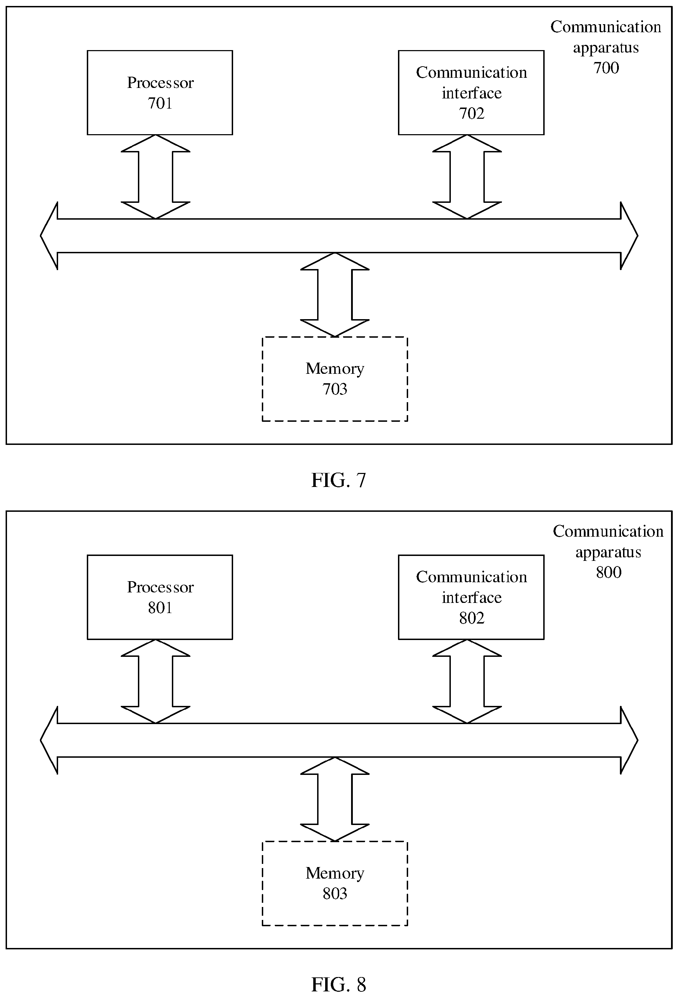

FIG. 7 is a diagram of a structure of a communication apparatus according to an embodiment of this application.

As shown in FIG. 7, the communication apparatus 700 includes a processor 701 and a communication interface 702. The communication apparatus 700 may be configured to implement functions of the first communication apparatus in any one of the foregoing embodiments. The communication apparatus 700 includes the processor 701 and the communication interface 702, which may communicate by using a bus. The bus is shown by using a line with an arrow in FIG. 7.

The communication interface 702 may be a transceiver or an input/output interface. The processor 701 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

Optionally, the communication apparatus 700 may further include a memory 703 that is configured to store instructions executed by the processor 701, store input data required by the processor 701 to run instructions, or store data generated after the processor 701 runs instructions.

Optionally, the communication apparatus 700 may be further configured to implement functions of the communication apparatus 500 in FIG. 5.

FIG. 8 is a diagram of a structure of a communication apparatus according to an embodiment of this application.

As shown in FIG. 8, the communication apparatus 800 includes a processor 801 and a communication interface 802. The communication apparatus 800 may be configured to implement functions of the second communication apparatus in any one of the foregoing embodiments. The communication apparatus 800 includes the processor 801 and the communication interface 802, which may communicate by using a bus. The bus is shown by using a line with an arrow in FIG. 8.

The communication interface 802 may be a transceiver or an input/output interface. The processor 801 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

Optionally, the communication apparatus 800 may further include a memory 803 that is configured to store instructions executed by the processor 801, store input data required by the processor 801 to run instructions, or store data generated after the processor 801 runs instructions.

Optionally, the communication apparatus 800 may be further configured to implement functions of the communication apparatus 600 in FIG. 6.

The method steps in embodiments of this application may be implemented in a hardware manner, or may be implemented in a manner of executing software instructions by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may alternatively exist in a base station or a terminal as discrete components.

All or some of the foregoing embodiments may be implemented by using software, hardware, firmware, or any combination thereof. When software is used to implement the embodiments, all or a part of the embodiments may be implemented in a form of computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A data analysis method, applied to a first communication apparatus, wherein the method comprises:
sending first information to a second communication apparatus, wherein the first information comprises an identity and capability information of a first management data analytic module, the first management data analytic module is disposed in the first communication apparatus, and the first management data analytic module is configured to analyze information about a network element;
receiving second information from the second communication apparatus, wherein the second information comprises the identity and control information of the first management data analytic module, and the control information is used to configure a running parameter of the first management data analytic module;
analyzing information about at least one network element by using the first management data analytic module, to obtain a first analytic result; and
sending the first analytic result to the second communication apparatus.

2. The method according to claim 1, wherein the capability information of the first management data analytic module comprises one or more of the following:
a capability identity, wherein the capability identity indicates a capability of the first management data analytic module;
information about supported analytic data; or
information about a supported analytic operation.

3. The method according to claim 2, wherein the analytic data comprises one or more of the following:
coverage analytic data, wherein the coverage analytic data comprises related data for analyzing coverage of a signal sent by the network element;
mobility analytic data, wherein the mobility analytic data comprises related data for analyzing handover of a terminal device between network elements;
energy saving analytic data, wherein the energy saving analytic data comprises related data for analyzing energy saving of the network element;
service quality analytic data, wherein the service quality analytic data comprises related data for analyzing service quality of the network element;
rate analytic data, wherein the rate analytic data comprises related data for analyzing a data transmission rate of the network element; or
capacity analytic data, wherein the capacity analytic data comprises related data for analyzing a capacity of the network element.

4. The method according to claim 2 or 3, wherein the analytic operation comprises one or more of the following:
a problem identification operation, wherein the problem identification operation is used to identify a problem existing in a network;
a root cause analytic operation, wherein the root cause analytic operation is used to identify a cause of a problem occurring in a network; or
an analytic solution adjustment operation, wherein the analytic solution adjustment operation is used to analyze an adjustment method of network information.

5. The method according to any one of claims 1 to 4, wherein the control information comprises one or more of the following:
information about an analytic scope, wherein the analytic scope indicates the at least one network element;
information about analytic time, wherein the analytic time indicates time at which the first management data analytic module performs the analytic operation; or
capability enabling information, wherein the capability enabling information is used to enable a part of or all capabilities of the first management data analytic module.

6. The method according to any one of claims 1 to 5, wherein the method further comprises:
sending, to the second communication apparatus, information about an analytic status of the first management data analytic module, wherein the analytic status indicates a status of performing the analytic operation by the first management data analytic module.

7. The method according to any one of claims 1 to 6, wherein the method further comprises:
receiving a query request from the second communication apparatus, wherein the query request comprises the identity of the first management data analytic module, and the identity of the first management data analytic module is used to request an analytic result of the first management data analytic module.

8. The method according to claim 7, wherein the query request further comprises an identity of a first type of analytic result or a second type of analytic result to which the first analytic result belongs, the first type of analytic result represents an analytic result currently obtained by the first management data analytic module, and the second type of analytic result represents an analytic result historically obtained by the first management data analytic module.

9. The method according to any one of claims 1 to 8, wherein
the first communication apparatus is a domain management unit in an autonomous network, the second communication apparatus is a cross domain management unit in the autonomous network, the domain management unit is configured to manage one or more network elements, and the cross domain management unit is configured to manage a plurality of network elements;
the first communication apparatus is a cross domain management unit in an autonomous network, the second communication apparatus is a service operation unit in the autonomous network, the cross domain management unit is configured to manage a plurality of network elements, and the service operation unit is configured to manage one or more services implemented by the plurality of network elements; or
the first communication apparatus is a service operation unit in an autonomous network, the second communication apparatus is a third-party system other than the autonomous network, and the service operation unit is configured to manage one or more services implemented by a plurality of network elements.

10. A management method for a management data analytic module, applied to a second communication apparatus, wherein the method comprises:
receiving first information from a first communication apparatus, wherein the first information comprises an identity and capability information of a first management data analytic module, the first management data analytic module is disposed in the first communication apparatus, and the first management data analytic module is configured to analyze information about a network element;
sending second information to the first communication apparatus, wherein the second information comprises the identity and control information of the first management data analytic module, and the control information is used to configure a running parameter of the first management data analytic module; and
receiving a first analytic result from the first communication apparatus, wherein the first analytic result is determined by the first management data analytic module.

11. The method according to claim 10, wherein the first information comprises identities and capability information of a plurality of management data analytic modules, the plurality of management data analytic modules comprise the first management data analytic module, and the method further comprises:
determining the first management data analytic module from the plurality of management data analytic modules.

12. The method according to claim 10 or 11, wherein the capability information of the first management data analytic module comprises one or more of the following:
a capability identity, wherein the capability identity indicates a capability of the first management data analytic module;
information about supported analytic data; or
information about a supported analytic operation.

13. The method according to claim 12, wherein the analytic data comprises one or more of the following:
coverage analytic data, wherein the coverage analytic data comprises related data for analyzing coverage of a signal sent by the network element;
mobility analytic data, wherein the mobility analytic data comprises related data for analyzing handover of a terminal device between network elements;
energy saving analytic data, wherein the energy saving analytic data comprises related data for analyzing energy saving of the network element;
service quality analytic data, wherein the service quality analytic data comprises related data for analyzing service quality of the network element;
rate analytic data, wherein the rate analytic data comprises related data for analyzing a data transmission rate of the network element; or
capacity analytic data, wherein the capacity analytic data comprises related data for analyzing a capacity of the network element.

14. The method according to claim 12 or 13, wherein the analytic operation comprises one or more of the following:
a problem identification operation, wherein the problem identification operation is used to identify a problem existing in a network;
a root cause analytic operation, wherein the root cause analytic operation is used to identify a cause of a problem occurring in a network; or
an analytic solution adjustment operation, wherein the analytic solution adjustment operation is used to analyze an adjustment method of network information.

15. The method according to any one of claims 10 to 14, wherein the control information comprises:
information about an analytic scope, wherein the analytic scope indicates at least one network element;
information about analytic time, wherein the analytic time indicates time at which the first management data analytic module performs the analytic operation; or
capability enabling information, wherein the capability enabling information is used to enable a part of or all capabilities of the first management data analytic module.

16. The method according to any one of claims 10 to 15, wherein the method further comprises:
receiving, from the first communication apparatus, information about an analytic status of the first management data analytic module, wherein the analytic status indicates a status of performing the analytic operation by the first management data analytic module.

17. The method according to any one of claims 10 to 16, wherein the method further comprises:
sending a query request to the first communication apparatus, wherein the query request comprises the identity of the first management data analytic module, and the identity of the first management data analytic module is used to request an analytic result of the first management data analytic module.

18. The method according to claim 17, wherein the query request further comprises an identity of a first type of analytic result or a second type of analytic result to which the first analytic result belongs, the first type of analytic result represents an analytic result currently obtained by the first management data analytic module, and the second type of analytic result represents an analytic result historically obtained by the first management data analytic module.

19. The method according to any one of claims 10 to 18, wherein
the first communication apparatus is a domain management unit in an autonomous network, the second communication apparatus is a cross domain management unit in the autonomous network, the domain management unit is configured to manage one or more network elements, and the cross domain management unit is configured to manage a plurality of network elements;
the first communication apparatus is a cross domain management unit in an autonomous network, the second communication apparatus is a service operation unit in the autonomous network, the cross domain management unit is configured to manage a plurality of network elements, and the service operation unit is configured to manage one or more services implemented by the plurality of network elements; or
the first communication apparatus is a service operation unit in an autonomous network, the second communication apparatus is a third-party system other than the autonomous network, and the service operation unit is configured to manage one or more services implemented by a plurality of network elements.

20. A communication apparatus, comprising:
a transceiver module, configured to: send first information to a second communication apparatus, wherein the first information comprises an identity and capability information of a first management data analytic module, the first management data analytic module is disposed in the communication apparatus, and the first management data analytic module is configured to analyze information about a network element; and receive second information from the second communication apparatus, wherein the second information comprises the identity and control information of the first management data analytic module, and the control information is used to configure a running parameter of the first management data analytic module; and
a processing module, configured to analyze information about at least one network element by using the first management data analytic module, to obtain a first analytic result, wherein
the transceiver module is further configured to send the first analytic result to the second communication apparatus.

21. A communication apparatus, comprising:
a receiving module, configured to receive first information from a first communication apparatus, wherein the first information comprises an identity and capability information of a first management data analytic module, the first management data analytic module is disposed in the first communication apparatus, and the first management data analytic module is configured to analyze information about a network element; and
a sending module, configured to send second information to the first communication apparatus, wherein the second information comprises the identity and control information of the first management data analytic module, and the control information is used to configure a running parameter of the first management data analytic module, wherein
the receiving module is further configured to receive a first analytic result from the first communication apparatus, wherein the first analytic result is determined by the first management data analytic module.

22. A communication apparatus, comprising a processor and a communication interface, wherein the communication interface is configured to: receive a signal from an apparatus other than the communication apparatus and transmit the signal to the processor, or send a signal from the processor to an apparatus other than the communication apparatus, and the processor implements the method according to any one of claims 1 to 19 by using a logic circuit or code instructions.

23. A computer-readable storage medium, wherein the storage medium stores a computer program or instructions, and when the computer program or the instructions are executed by a communication apparatus, the method according to any one of claims 1 to 19 is implemented.
